Europäisches Patentamt

European Patent Office

Office européen des brevets

(11) Numéro de publication: **0 228 930**
**A1**

## (12) DEMANDE DE BREVET EUROPEEN

(21) Numéro de dépôt: **86402564.8**

(22) Date de dépôt: **19.11.86**

(51) Int. Cl.⁴: **F 16 B 7/18**
**E 04 B 1/19**

(30) Priorité: **19.11.85 FR 8517055**
**27.12.85 FR 8519308**

(43) Date de publication de la demande:
**15.07.87 Bulletin 87/29**

(84) Etats contractants désignés: **DE ES GB IT NL**

(71) Demandeur: **Chamayou, Gérard**
**93, rue Broca**
**F-75013 Paris (FR)**

(72) Inventeur: **Chamayou, Gérard**
**93, rue Broca**
**F-75013 Paris (FR)**

(74) Mandataire: **Nony, Michel et al**
**Cabinet NONY & CIE 29, rue Cambacérès**
**F-75008 Paris (FR)**

(54) **Dispositif d'assemblage pour tubes ou barres.**

(57) L'invention est relative à un dispositif pour tubes ou barres munis d'embouts taraudés.

Il comprend un noyau creux (1) comportant une pluralité de trous (2, 3) et au moins deux vis (7) possèdant chacune un filetage (10, 11) à chacune de ses extrémités, chaque vis traversant un desdits trous (2) et ayant son filetage (11) intérieur au noyau vissé sur un écrou (12) et son filetage (10) extérieur vissé sur l'embout (9) d'un desdits tubes ou barres (4), l'un des trous (3) ayant des dimensions supérieures à celles des écrous pour permettre l'introduction des écrous dans ledit noyau, des moyens de serrage (14) étant prévus pour assurer le serrage de chaque vis sur l'embout correspondant.

Fig. 1

EP 0 228 930 A1

**Description**

Dispositif d'assemblage pour tubes ou barres.

La présente invention concerne un dispositif d'assemblage d'un premier élément à un deuxième élément, tels que des tubes ou barres, munis d'embouts taraudés.

On connaît déjà de tels dispositifs dans lesquels les extrémités d'une pluralité de tubes ou de barres sont réunies au niveua d'un noyau d'assemblage. Ces dispositifs connus présentent toutefois l'inconvénient que, pour permettre le vissage des extrémités des tubes, les noyaux doivent être de grande dimension, et par conséquent, lourds, onéreux et inesthétiques.

La présente invention vise à pallier cet inconvénient.

A cet effet, l'invention a tout d'abord pour objet un dispositif d'assemblage d'un premier élément à un deuxième élément muni d'un embout taraudé, comprenant une vis susceptible de coopérer avec ledit embout et munie d'une tête agencée pour être maintenue dans ledit premier élément, caractérisé par le fait qu'il comprend des moyens de serrage comprenant une bague, solidaire en rotation du corps de ladite vis et pouvant coulisser librement sur ledit corps.

L'invention a également pour objet un dispositif d'assemblage pour tubes ou barres munis d'embouts taraudés, caractérisé par le fait qu'il comprend un noyau creux comportant une pluralité de trous et au moins deux vis possédant chacune un filetage à chacune de ses extrémités, chaque vis traversant un desdits trous et ayant son filetage intérieur au noyau vissé sur un écrou et son filetage extérieur vissé sur l'embout d'un desdits tubes ou barres, l'un des trous ayant des dimensions supérieures à celles des écrous pour permettre l'introduction des écrous dans ledit noyau, des moyens de serrage étant prévus pour assurer le serrage de chaque vis sur l'embout correspondant.

Le fait d'utiliser une vis et un écrou séparés présente un certain nombre d'avantages.

Tout d'abord, le trou par lequel sont introduits les écrous ne doit avoir que des dimensions juste supérieures à ces écrous.

La résistance mécanique du noyau n'en est donc que très peu diminuée.

Par ailleurs, il n'est pas nécessaire de prévoir des manipulations de la vis à l'intérieur du noyau. Celui-ci peut par conséquent être de faibles dimensions.

Les moyens de serrage peuvent comprendre par exemple une bague de serrage engagée sur le corps de la vis entre les deux filetages, ladite bague étant solidaire en rotation du corps mais pouvant coulisser librement sur lui.

Le montage s'effectue alors en introduisant un écrou à l'intérieur du noyau, en faisant pénétrer par un des trous le filetage correspondant d'une des vis, à visser l'écrou sur ce filetage puis, à l'aide de la bague de serrage, à faire tourner la vis de manière à engager son autre filetage dans l'embout taraudé du tube ou de la barre.

On peut de la sorte assembler au noyau deux ou plusieurs tubes ou barres.

Dans un mode de réalisation particulier de l'invention, lorsque la vis est serrée, la bague a une de ses extrémités en appui sur la surface extérieure du noyau et son autre extrémité en appui sur ledit embout.

On obtient ainsi une excellente résistance mécanique de la liaison entre le tube et le noyau du fait que la vis se trouve alors en traction entre l'écrou intérieur au noyau et l'embout, alors que la bague se trouve en compression.

De manière à assurer le coulissement longitudinal de la bague sur le corps de la vis et l'entraînement en rotation, ce corps et la surface intérieure de la bague peuvent comporter des canelures longitudinales complémentaires.

Avantageusement, on peut prévoir des moyens amovibles pour empêcher le coulissement de la bague sur le corps de la vis.

Ces moyens ont deux fonctions. D'une part, ils empêchent la séparation de la bague et de la vis avant le montage, évitant en particulier la perte de la bague.

Par ailleurs, ils permettent de présenter convenablement l'extrémité du filetage de la vis par rapport au début du taraudage de l'embout et facilite ainsi le début du vissage.

Ces moyens amovibles peuvent par exemple comprendre une cheville engagée à force dans un trou radial de la bague, et ayant son extrémité interne en appui sur le corps de la vis, ou encore comprendre un clip pincé sur la bague et muni d'une saillie engagée dans le filetage extérieur de la vis.

Avantageusement, les deux filetages de chaque vis ont des sens opposés, de sorte que, lorsque l'on serre la vis sur l'embout, le serrage de la vis sur l'écrou en est augmenté.

Dans une forme de réalisation particulière de l'invention, le noyau est sensiblement sphérique, mais d'autres formes peuvent bien entendu être envisagées.

Dans le cas où la structure assemblée est soumise à un environnement difficile pouvant entraîner des conséquences dommageables au niveau du noyau par suite de phénomènes de gel ou de corrosion, on peut avantageusement prévoir au moins un élément d'étanchéité rapporté apte à isoler de façon étanche vis-à-vis de l'extérieur la cavité intérieur du noyau.

Dans un premier mode de réalisation, l'élément d'étanchéité est constitué par un joint annulaire compressible interposé entre les faces en regard de l'obturateur et de la paroi de l'orifice logeant celui-ci.

Dans un second mode de réalisation, l'élément d'étanchéité est constitué par une masse durcissable injectée par un orifice d'injection prévu à cet effet dans la paroi du noyau et remplissant au moins partiellement la cavité intérieure du noyau. Comme matériau durcissable, on peut citer par exemple le ciment ou les mousses expansibles, par exemple des mousses de polyuréthane à cellules fermées.

Le matériau d'étanchéité peut être injecté directement dans la cavité ou à l'intérieur d'une poche déformable mise en place dans la cavité.

On peut également selon l'invention réaliser l'étanchéité en associant l'élément d'étanchéité du premier mode de réalisation et l'élément d'étanchéité selon le second mode de réalisation.

On décrira maintenant à titre d'exemple non limitatif des modes de réalisation particulier de l'invention en référence aux dessins schématiques annexés dans lesquels :

- la figure 1 est une vue en coupe d'un premier dispositif selon l'invention sur lequel un seul tube est monté,

- la figure 2 est une vue en coupe selon la ligne II-II de la figure 1,

- la figure 3 est une vue en perspective d'un clip selon l'invention,

- la figure 4 est une vue partielle en coupe montrant le clip de la figure 3 monté sur le dispositif.

- la figure 5 illustre en coupe une deuxième forme de réalisation de l'invention, dans laquelle les vis de liaison n'ont pas été représentés,

- la figure 6 est une vue analogue à la figure 5 illustrant une autre forme de réalisation,

- la figure 7 est une vue analogue illustrant une autre forme de réalisation, et

- la figure 8 est une vue analogue représentant une autre forme de réalisation.

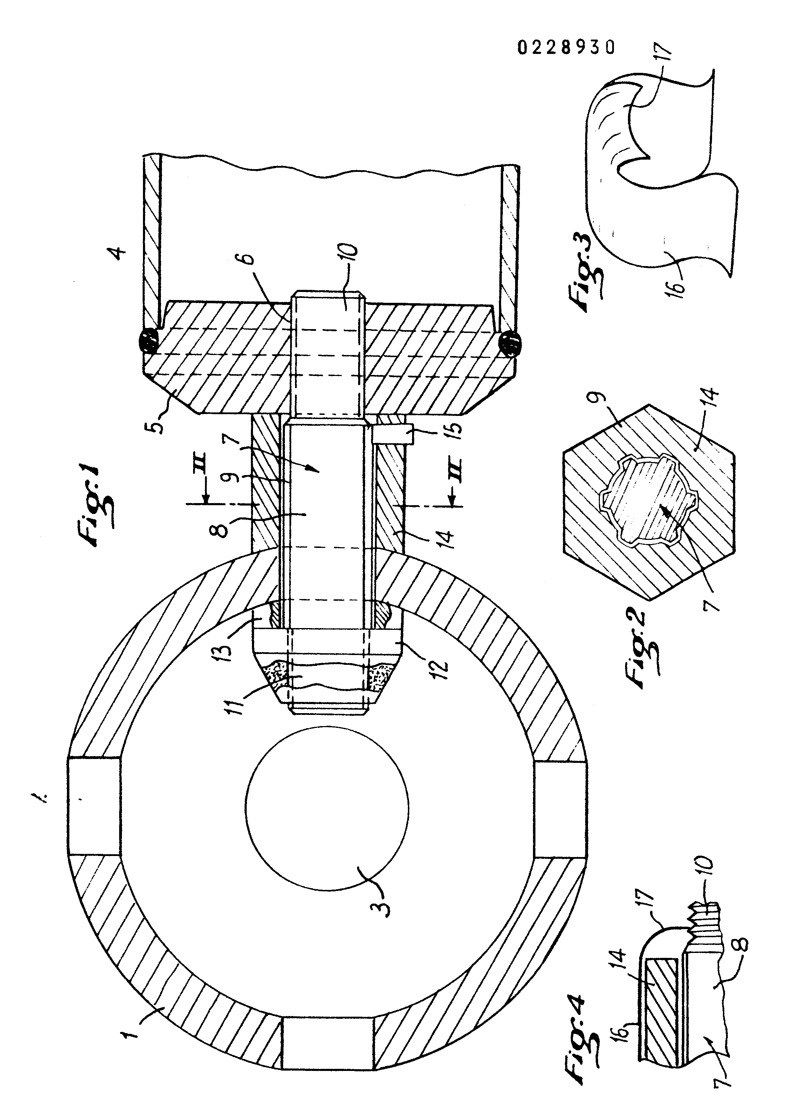

Le dispositif selon la figure 1 comprend un noyau sphèrique creux 1 dans lequel sont ménagés des trous de petites dimensions et un trou 3 de plus grandes dimensions, apte à être fermé par un obturateur en forme de calotte dont différentes formes d'exécution sont illustrées aux figures 5 à 8 sous les références 115a à 115 d.

Le nombre de trous 2 dépend du nombre de tubes tels que 4 que l'on souhaite assembler au noyau 1.

Les tubes 4 sont munis à leurs extrémités d'embouts 5 dans lesquels est formé un taraudage 6.

Une vis 7 comporte un corps central 8 à la surface duquel sont formées des canelures longitudinales 9. La vis 7 possède d'autre part à une de ses extrémités un filetage 10 correspondant au taraudage 6 et à son autre extrémité, un filetage 11 de sens opposé au filetage 10.

Le filetage 11 qui, comme on le verra ci-après, est destiné à travailler à l'intérieur du noyau 1, a de préférence une section supérieure à celle du filetage 10. Ce dernier peut en effet être contrôlé beaucoup plus facilement.

La vis 7 est engagée à l'intérieur d'un des trous 2 de sorte que son filetage 11 puisse être vissé sur un écrou 12. Une rondelle 13 est interposée entre l'écrou 12 et la surface intérieure de la sphère 1.

Une bague 14 dont la surface intérieure est munie de canelures correspondant aux canelures 9 du corps de la vis est engagée sur ce corps de manière à pouvoir l'entraîner en rotation, par exemple à l'aide d'une clé.

Une cheville 15, par exemple en matière plastique, est engagée à force dans un trou radial de la bague jusqu'à venir en contact avec le corps 8 de la vis 7 pour empêcher temporairement la bague 14 de coulisser par rapport à cette vis.

La rondelle 13 et l'écrou 12 ayant été introduits dans la sphère 1 par le trou 3 dont les dimensions sont prévues à cet effet, la vis 7 est vissée sur l'écrou 11 et l'extrémité du filetage 10 est engagée dans le taraudage 6 en s'aidant de la bague 14 qui est encore solidaire de la vis.

La cheville 15 est alors retirée et le filetage 10 est vissé dans le taraudage 6 en faisant tourner la vis 7 à l'aide de la bague 14 par l'intermédiaire des canelures 9. Lorsque les extrémités de la bague 14 viennent en appui d'une part sur la surface extérieure de la sphère 1, et d'autre part sur l'embout 5, les deux filetages 10 et 11 sont bloqués, l'un dans le taraudage 6 et l'autre dans l'écrou 12, du fait que ces filetages sont inversés.

Le tube 4 est ainsi fermement solidarisé à la sphère 1.

D'autres tubes 4 peuvent alors être assemblés au noyau sphèrique 1 au niveau des autres trous 2.

Les figures 3 et 4 représentent une variante des moyens de solidarisation temporaire de la bague 14 par rapport à la vis 7.

Un clip 16 est monté sur la bague 14 par pincement et possède une saillie 17 rabattue vers la vis de manière à venir s'engager dans des filets du filetage 10. Le clip 16 est maintenu sur la bague de serrage 14 tant que le filetage 10 n'est pas engagé dans le taraudage 6. Lorsque ceci est effectué, le clip 7 est retiré et le serrage s'effectue comme précédemment.

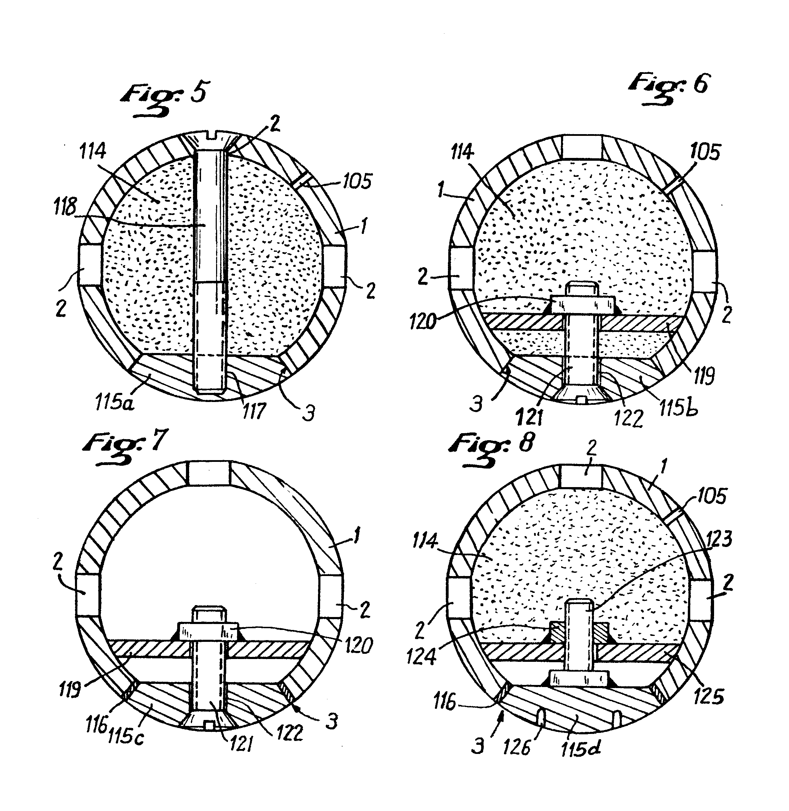

Dans les formes de réalisations illustrées aux figures 5 et 6, l'élément d'étanchéité est une masse durcissable 114 remplissant la cavité intérieure du noyau et injectée par un orifice d'injection de faibles dimensions 105 réalisé dans la paroi du noyau 1. Outre sa fonction d'étanchéité la masse 114 assure une fonction supplémentaire de blocage des écrous intérieurs de blocage 12.

Dans le mode de réalisation de la figure 7, l'élément d'étanchéité est un joint annulaire compressible 116 de profil tronconique mis en place entre des portées tronconiques en regard de l'orifice 3 ménagé dans le noyau et de l'obturateur en forme de calotte 115c.

Dans le mode de réalisation de la figure 8, il est prévu deux éléments d'étanchéité, à savoir d'une part une mase durcissable 114 remplissant la cavité du noyau et, d'autre part, un joint annulaire compressible 116 disposé également entre des portées tronconiques en regard de l'orifice 3 et de l'obturateur 115d.

L'obturateur 115a illustré à la figure 5 est solidarisé du noyau en étant muni d'un taraudage 117 dans lequel s'engage une vis 118 introduite par un trou 2 diamétralement opposé à l'orifice 3.

Dans le mode de réalisation de la figure 6, il est prévu pour immobiliser l'obturateur 115b, une entretoise 119 munie d'un écrou prisonnier 120 dans lequel est vissée une vis 121 engagée dans un trou 122 prévu à cet effet dans l'obturateur 115b.

Le même montage est prévu pour l'obturateur 115c de la forme de réalisation de la figure 7.

On voit à la figure 8, une variante d'obturateur 115d dont la face intérieure est solidaire d'une vis 123 s'engageant par vissage dans un écrou 124, lui-même solidaire d'une entretoise 125.

Dans ce mode de réalisation, l'obturateur 115d constitue en quelque sorte la tête de la vis 123 et peut être entraîné en rotation par une clé de manoeuvre (non représentée) s'engageant dans des encoches 126 ménagées à cet effet dans la paroi extérieure de l'obturateur 115d.

Diverses variantes et modifications peuvent bien entendu être apportées à la description qui précède sans sortir pour autant du cadre ni de l'esprit de l'invention.

C'est ainsi, en particulier, que les cannelures qui permettent le coulissement longitudinal de la bague sur le corps de la vis tout en assurant l'entraînement en rotation pourraient éventuellement être remplacées par un ou plusieurs tétons fixés au corps de la vis et coopérant avec des fentes longitudinales de la bague.

**Revendications**

1 - Dispositif d'assemblage pour tubes ou barres munis d'embouts taraudés, caractérisé par le fait qu'il comprend un noyau creux (1) comportant une pluralité de trous (2,3), et au moins deux vis (7) possèdent chacune un filetage (10, 11) à chacune de ses extrémités, chaque vis traversant un desdits trous (2) et ayant son filetage (11) intérieur au noyau vissé sur un écrou (12) et son filetage (10) extérieur vissé sur l'embout (9) d'un desdits tubes ou barres (4), l'un des trous (3) ayant des dimensions supérieures à celles des écrous pour permettre l'introduction des écrous dans ledit noyau, des moyens de serrage (14) étant prévus pour assurer le serrage de chaque vis sur l'embout correspondant.

2 - Dispositif selon la revendication 1, caractérisé par le fait que lesdits moyens de serrage comprennent une bague de serrage engagée sur le corps (8) de la vis entre ses deux filetages, ladite bague étant solidaire en rotation dudit corps mais pouvant coulisser librement sur lui.

3 - Dispositif selon la revendication 2, caractérisé par le fait que, lorsque la vis est serrée, ladite bague a une de ses extrémités en appui sur la surface extérieure du noyau et son autre extrémité en appui sur ledit embout.

4 - Dispositif selon l'une quelconque des revendications 2 et 3, caractérisé par le fait que le corpe de la vis et la surface intérieure de la bague comportent des canelures longitudinales complémentaires (9).

5 - Dispositif selon l'une quelconque des revendications 2 à 4, caractérisé par le fait que des moyens amovibles (15,16) sont prévus pour empêcher le coulissement de la bague sur le corps de la vis.

6 - Dispositif selon la revendication 5, caractérisé par le fait que lesdits moyens amovibles comprennent une cheville (15) engagée à force dans un trou radial de la bague et ayant son extrémité interne en appui sur le corps de la vis.

7 - Dispositif selon la revendication 5, caractérisé par le fait que lesdits moyens amovibles comprennent un clip (16) pincé sur la bague et muni d'une saillie (17) engagée dans le filetage extérieur de la vis.

8 - Dispositif selon l'une quelconque des revendications 1 à 7, caractérisé par le fait que les deux filetages de chaque vis ont des sens opposés.

9 - Dispositif selon l'une quelconque des revendications 1 à 8, caractérisé par le fait que ledit noyau est sensiblement sphérique.

10 - Dispositif d'assemblage d'un premier élément (1) à un deuxième élément (4) muni d'un embout taraudé (5), comprenant une vis (7) susceptible de coopérer avec ledit embout et munie d'une tête (12) agencée pour être maintenue dans ledit premier élément, caractérisé par le fait qu'il comprend des moyens de serrage (14) comprenant une bague, solidaire en rotation du corps (8) de ladite vis et pouvant coulisser librement sur ledit corps.

11 - Dispositif d'assemblage pour tubes ou barres munis d'embouts taraudés et comportant un noyau d'assemblage creux, notamment de forme sphérique, comportant une pluralité de trous pour le passage d'éléments filetés destinés à coopérer avec les embouts taraudés des tubes ou barres à assembler et un orifice de plus grandes dimensions, apte à être fermé par un obturateur, en forme de calotte, muni des moyens de fixation au noyau, caractérisé par le fait qu'il comporte au moins un élément d'étanchéité rapporté (14, 16) apte à isoler de façon étanche vis-à-vis de l'extérieur la cavité intérieure (3) du noyau (1).

12 - Dispositif selon la revendication 11, caractérisé par le fait que l'élément d'étanchéité est constitué par un joint annulaire compressible (16) interposé entre les faces en regard de l'obturateur (5a, 5b, 5c, 5d) et la paroi de l'orifice (4) logeant celui-ci.

13 - Dispositif selon la revendication 11, caractérisé par le fait que l'élément d'étanchéité est constitué par une masse durcissable (14) injectée par un orifice d'injection (15) prévu à cet effet dans la paroi du noyau (1) et remplissant au moins partiellement la cavité intérieure du noyau.

14 - Dispositif selon la revendication 11, caractérisé par le fait qu'il comporte à la fois un élément d'étanchéité selon la revendication 12 et un élément d'étanchéité selon la revendication 13.

0228930

Fig.1

Fig.2

Fig.3

Fig.4

Fig.5

0228930

Fig. 5

114
118
2
2
115a
117
3
105
1
2

Fig. 6

114
1
2
120
3
121
122
115b
105
2
119

Fig. 7

2
119
116
115c
121
122
1
2
120
3

Fig. 8

2
114
2
124
116
3
126
115d
1
105
123
2
125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 439 935  (METALLURGIQUE DE BRETAGNE)<br>* Figure; revendication 1 * | 1,11 | F 16 B    7/18<br>E 04 B    1/19 |
| A | | 9,10, 12 | |
| | --- | | |
| X | EP-A-0 081 608  (PFEIFER)<br>* Figures 2,3; revendication 1 * | 1,11 | |
| A | | 9,10, 12 | |
| | --- | | |
| X | GB-A-1 189 235  (CRIGHTON)<br>* Figure; page 1, lignes 57-83 * | 1,11 | |
| A | | 12 | DOMAINES TECHNIQUES RECHERCHES (Int. Cl.4)<br><br>F 16 B<br>E 04 B |
| | --- | | |
| A | FR-A-2 434 903  (APEZTEGUIA et al.)<br>*  Revendications  1-3;   figures 1,6,7 * | 1,5-11 | |
| | --- | | |
| A | DE-B-2 736 635  (MERO)<br>* Revendication 1; figures 1,2 * | 1-3,11 | |
| | ---            -/- | | |

Le présent rapport de recherche a été établi pour toutes les revendications

| Lieu de la recherche | Date d'achèvement de la recherche | Examinateur |
|---|---|---|
| LA HAYE | 12-02-1987 | SCHAEFFLER C.A.A. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 273 914 (MANNESMANNROHREN-WERKE AG) * Figures * | 1,11 | |
| A | FR-A-2 474 641 (ALLEGHENY LUDLUM) * Page 4, lignes 8-17; figures * | 1,11 | |
| A | DE-A-2 426 973 (MYLAEUS) * Figures; revendication 1 * | 1-3,11 | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 12-02-1987 | SCHAEFFLER C.A.A. |